# EUROPÄISCHE PATENTANMELDUNG

(11) **EP 4 124 273 A1**
(43) Veröffentlichungstag der Anmeldung: **01.02.2023**
(21) Anmeldenummer: 22185408.6
(22) Anmeldetag: 18.07.2022
(51) Int. Cl.: A47J 41/00, A47J 41/02, F16N 39/04, F16N 3/12

(54) **THERMOSGEFÄSS**

(30) Priorität: 27.07.2021 DE 102021119392
(71) Anmelder: Alfred-Wegener-Institut Helmholtz-Zentrum für Polar- und Meeresforschung, 27570 Bremerhaven (DE)
(72) Erfinder: Lemburg, Johannes, 23911 Salem (DE); Fischer, Philipp, 27498 Helgoland (DE); Bochert, Thore, 28215 Bremen (DE)

(57) **Zusammenfassung**

Bekannte Thermosgefäße nehmen Gegenstände vollständig auf, sodass diese nur schwer zu entnehmen sind. Bei dem erfindungsgemäßen Thermosgefäß (01) ist eine Flüssigkeitskammer (06) mit einer Einsatzkammer (12) kaskadiert, wobei zwischen diesen kein Flüssigkeitsaustausch, aber ein Wärmeaustausch stattfinden kann. In die Einsatzkammer (12) können eine weitere Flüssigkeit (03) und ein Gegenstand (04) eingefüllt werden, wobei dieser aus der Einsatzkammer (12) herausragt. Ein Verschlusskörper (15) dichtet die Flüssigkeitskammer (06) dauerhaft und die Einsatzkammer (12) gegenüber dem Gegenstand (04) lösbar ab. Hierbei kann es sich um eine Fettpresse (05) handeln, deren Fettvorrat (30) von der weiteren Flüssigkeit (03) erwärmt und unter Wasser in Steckkontakte eingespritzt werden kann. Der Verschlusskörper (15) weist einen Stopfen (19) auf, der die Fettpresse (05) dauerhaft umgibt und lösbar in einen Trichter (18) eingepasst ist. Beim Entnehmen und Rückstecken der Fettpresse (05) unter Wasser wird die weitere Flüssigkeit (03) ausgetauscht und über die Flüssigkeit (02) in der Flüssigkeitskammer (06) schnell wieder erwärmt. So kann die Fettpresse (05) mehrfach unter Wasser eingesetzt werden und ist einfach handhabbar. Handelsübliche Travel Mugs sind nach Modifikation verwendbar.

## Beschreibung

Die Erfindung bezieht sich auf ein Thermosgefäß zum Temperieren von Inhalten mit einer Flüssigkeitskammer, die mit einer Flüssigkeit befüllbar und von einer thermischen Isolierschicht umgeben ist und an ihrem oberen Ende eine Einfüllöffnung aufweist, und einer flüssigkeitsdichten Einsatzkammer, die sich von der Einfüllöffnung her in die Flüssigkeitskammer erstreckt, wärmeleitend ausgebildet ist und an ihrem oberen Ende eine Eingabeöffnung mit einem Verschlusskörper aufweist, der die Flüssigkeitskammer und die Einsatzkammer flüssigkeitsdicht abschließt.

Thermosgefäße sind in unterschiedlichen Ausführungsformen bekannt und dienen der Temperierung, d.h. Konstanthaltung der Temperatur von eingefüllten Gütern durch eine besonders gut thermische Isolation. Dabei kann es sich sowohl um heiße, warme als auch gekühlte, sehr kalte Güter handeln, die in allen drei Aggregatzuständen (fest, flüssig, gasförmig) auftreten können. Handelsüblich sind sogenannte Isolier- oder Thermoskannen oder auch Isolier- oder Thermosbecher ("Travel Mug") sowie große Isolierbehälter für technische Fluide, Reagenzien oder Gegenstände, die vollständig im Isolierbehälter versenkt werden.

### Stand der Technik

Der der Erfindung nächstliegende Stand der Technik ist aus der DE 196 37 899 A1 bekannt. Das offenbarte gattungsgemäße Thermosgefäß dient der Erzeugung von Tee unmittelbar in einer Thermoskanne, die eine große Flüssigkeitskammer zur Aufnahme von heißem Wasser aufweist. Dieses wird über ein Einfüllöffnung, die sich am oberen Ende (Standposition) der Thermoskanne befindet, eingefüllt. Zur thermischen Isolation ist die Flüssigkeitskammer mit einer thermischen Isolationsschicht umgeben, wobei keine weiteren Angaben zu deren technischer Ausgestaltung gemacht werden. Desweiteren erstreckt sich eine Einsatzkammer von der Einfüllöffnung der Flüssigkeitskammer in diese hinein. Die Einsatzkammer dient dem Einfüllen von Teeblättern, die durch eine große Eingabeöffnung am oberen Ende (Standposition) der Einsatzkammer vollständig eingefüllt werden. Die Einsatzkammer ist in einem ersten Zustand durch Gittereinsätze flüssigkeitsdurchlässig, wobei das Wasser aus der Flüssigkeitskammer auch die Einsatzkammer durchdringt. Durch diesen Stoffaustausch wird zwangsläufig auch eine Wärmeaustausch erreicht. In einem zweiten Zustand sind die Gittereinsätze durch Drehung verschlossen, sodass die Einsatzkammer flüssigkeitsdicht ist. Anschließend geht es aber nur noch um das Temperieren (Warmhalten) des Teewassers als Inhalt und nicht des eingefüllten Tees. Der Tee ist vollständig in der Einsatzkammer versenkt und verbleibt dauerhaft in ihr. Er kann nur durch Entnehmen und Ausschütteln der Einsatzkammer entnommen werden. Darunter leidet aber die Temperierung des Teewassers. Verschlossen wird die Eingabeöffnung der Einsatzkammer durch einen flüssigkeitsdichten Verschlusskörper, der gleichzeitig die Einfüllöffnung der Flüssigkeitskammer verschließt. Dabei ist der Verschlusskörper als geschlossener, einstückiger Schraubdeckel ausgebildet, der gleichzeitig die Flüssigkeitskammer verschließt.

Aus der EP 0 148 963 A2 ist ein ähnliches Isoliergefäß bekannt, bei der die Flüssigkeitskammer von zwei Stahlwandungen (Doppelwandung) umgeben ist, zwischen den sich ein Vakuum befindet, was sehr gut wärmeisolierend wirkt. In die Flüssigkeitskammer ragt eine Einsatzkammer hinein, wobei es sich in diesem Fall um einen zylindrischen Kühlakkumulator handelt, der flüssigkeitsdicht ausgebildet ist. Da er aber wärmeleitend ausgebildet ist, kann er Wärme aus der Flüssigkeit in der Flüssigkeitskammer aufnehmen und diese dadurch abkühlen. Der Kühlakkumulator ist fest mit einem flüssigkeitsdichten Verschlusskörper verbunden, mit dem auch die Einfüllöffnung der Flüssigkeitskammer verschlossen ist. Auch dieser Verschlusskörper ist als geschlossener, einstückiger Schraubdeckel ausgebildet. Aus der US 2011/0 108 506 A1 ist ein Thermosbecher bekannt, bei dem ebenfalls ein Kühlakkumulator in die Flüssigkeit hineinragt und der mit dem Verschlusskörper fest verbunden ist. In diesem Fall handelt es sich um einen abgeschlossenen, einstückigen Deckel, der auf die Doppelwandung der Flüssigkeitskammer aufgesteckt ist und diese flüssigkeitsdicht verschließt.

Aus der JP2006- 255 334 A ist ein Isoliercontainer bekannt, der auch als doppelter Thermosbecher (vergleiche Fig. 9) ausgeführt werden kann. Dazu wird ein kleiner Thermosbecher in einen großen Thermosbecher über dessen Einfüllöffnung eingebracht, wobei die beiden Thermosbecher nicht weiter miteinander verbunden sind. Der Zwischenraum zwischen dem kleinen und dem großen Thermosbecher wird mit Flüssigkeit gefüllt. Beide Becher sind mit eigenen abgeschlossenen, einstückigen Steckdeckeln flüssigkeitsdicht verschlossen und können unterschiedlich temperierte Flüssigkeiten aufnehmen (beispielsweise als Trinkflüssigkeit im kleinen Thermosbecher und als Kühlflüssigkeit im großen Thermosbecher für einen Marathonläufer). Weiterhin dient die Flüssigkeit im großen Thermosbecher der zusätzlich Isolation der Flüssigkeit im kleinen Thermosbecher. Ein Wärmeaustausch zwischen den beiden Flüssigkeiten findet nicht statt. Beim Entnehmen des kleinen Thermosbechers aus dem großen Thermosbecher kann auch die Flüssigkeit aus diesem entweichen bzw. verbraucht werden. Zum Entnehmen muss der Steckdeckel von dem großen Thermobecher entfernt werden.

Aus der EP 2 238 873 A2 ist ein transportabler Thermosbecher ("Travel Mug") bekannt, bei dem mit einem ringförmigen Schraubdeckel eine Platte mit einem Trinkventil im Thermosbecher festgehalten wird.

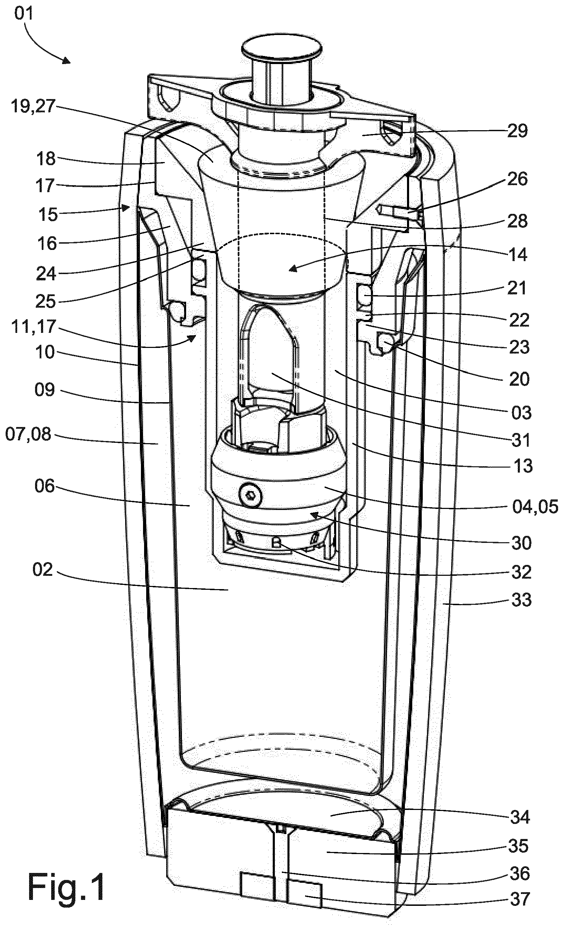

Aus der JP 2000- 170 682 A ist zwar ein Thermosgefäß zum Temperieren von Inhalten mit einer Flüssigkeitskammer (vgl. Fig. 1) bekannt, die mit einer Flüssigkeit befüllbar und von einer thermischen Isolierschicht umgeben ist und an ihrem oberen Ende eine Einfüllöffnung aufweist. Eine flüssigkeitsdichte Einsatzkammer, die sich von der Einfüllöffnung her in die Flüssigkeitskammer erstreckt und wärmeleitend ausgebildet ist, ist jedoch nicht vorgesehen. Eine analoge Vorrichtung offenbart auch die JP 2000- 166 775 A, allerdings finden sich auch dort keine Hinweise auf eine Einsatzkammer.

### Aufgabenstellung

Ausgehend von dem erläuterten nächstliegenden Stand der Technik ist die **Aufgabe** für die vorliegende Erfindung darin zu sehen, das eingangs beschriebene gattungsgemäße Thermosgefäß so weiterzubilden, dass feste Inhalte, insbesondere Gegenstände, mehrfach entfernt und wieder eingebracht werden können, ohne dass dabei die Temperierung aufgehoben wird. Für die **Lösung** dieser Aufgabe ist erfindungsgemäß vorgesehen, dass die Einsatzkammer über die Eingabeöffnung mit einer weiteren Flüssigkeit und mit einem Gegenstand innerhalb der weiteren Flüssigkeit befüllbar ausgebildet ist, wobei der eingefüllte Gegenstand über die Eingabeöffnung hinausragt, und der Verschlusskörper die Einsatzkammer gegenüber dem eingefüllten Gegenstand abschließt.

Bei der Erfindung können Inhalte in Form von Gegenständen dauerhaft temperiert werden, auch wenn sie während der Temperierung mehrfach dem Isoliergefäß entnommen und wieder in dieses eingebracht werden. Dabei ist insbesondere das Entnehmen des Gegenstands bei der Erfindung besonders einfach, weil er - auch während der Temperierung - teilweise aus dem Isoliergefäß herausragt und so besonders gut - auch unter erschwerten Umständen - gegriffen werden kann. Erfindungsgemäß sind zwei kaskadierende Kammern zur Temperierung vorgesehen. In eine größere Kammer (Flüssigkeitskammer) ist eine kleinere Kammer (Einsatzkammer) eingebracht. In beide Kammern können sowohl eine Flüssigkeit als auch ein Gegenstand eingebracht werden. In die Flüssigkeitskammer ist dauerhaft die Einsatzkammer eingebracht, wohingegen in die Einsatzkammer optional ein Gegenstand eingebracht werden kann. Der Gegenstand wird dann durch die weitere Flüssigkeit in der Einsatzkammer temperiert. Die weitere Flüssigkeit wiederum wird durch die Flüssigkeit in der Flüssigkeitskammer temperiert, weil die Einsatzkammer wärmeleitend ausgebildet ist. Mit dem erfindungsgemäßen Thermosgefäß können also zwei Flüssigkeiten und ein Gegenstand gleichzeitig temperiert werden. Dabei können insbesondere die weitere Flüssigkeit und der Gegenstand in der Einsatzkammer nach einer Entnahme mehrfach erneut temperiert werden, weil sich der temperierende Energiegehalt die Flüssigkeit nur langsam mit der Zeit verringert. Der Verschlusskörper ist erfindungsgemäß so ausgebildet, dass der in die Einsatzkammer einbringbare Gegenstand durch ihn hindurchragen und damit aus der Eingabeöffnung der Einsatzkammer herausragen kann. Dabei verschließt der Verschlusskörper aber nach wie vor sowohl die Flüssigkeitskammer als auch die Einsatzkammer.

Gemäß einer ersten bevorzugten und vorteilhaften Ausgestaltung der Erfindung ist vorgesehen, dass der Verschlusskörper zumindest zweiteilig ausgebildet ist und aus einem Schraubdeckel mit einer Durchgangsöffnung und einem Stopfen, der in die Durchgangsöffnung lösbar eingepasst ist, besteht, wobei der Stopfen den Gegenstand umschließt. Mit einer zweiteiligen Ausbildung können die Flüssigkeitskammer und die Einsatzkammer getrennt voneinander geöffnet und verschlossen werden. Nachdem die Flüssigkeitskammer mit temperierender Flüssigkeit befüllt wurde, bleibt sie durch den Schraubdeckel dauerhaft verschlossen, auch wenn die Einsatzkammer mehrfach geöffnet und durch den Stopfen wieder verschlossen wird. Da der Stopfen den Gegenstand umschließt, können Stopfen und Gegenstand gleichzeitig aus dem Thermosgefäß entfernt werden. Vorteilhaft ist hierbei, wenn der Stopfen nur geklemmt und nicht eingeschraubt wird - der Gegenstand muss dann zum Öffnen und Schließen durch den Stopfen nicht mitgedreht werden. Beim Öffnen der Einsatzkammer entweicht auch die Flüssigkeit darin. Bevor ein Gegenstand und der Stopfen erneut in die Einsatzkammer eingepasst werden, wird diese erneut mit Flüssigkeit gefüllt. Vorteilhaft ist es, wenn die Größe der Einsatzkammer an die Größe des einzubringenden Gegenstands angepasst ist und diesen möglichst eng umschließt. Es bietet sich eine zentrale Anordnung der Einsatzkammer in der Flüssigkeitskammer kann. Ebenso ist es vorteilhaft, wenn der Stopfen zentral in den Schraubdeckel eingebracht werden kann, der Schraubdeckel also eine mittige Durchgangsöffnung für den Stopfen aufweist. Bei einer zylindrischen (oder zylindrokonischen) Ausbildung von Flüssigkeits- und Einsatzkammer ergibt sich dann eine vorteilhafte konzentrische Ausbildung des mit der Erfindung beanspruchten Thermosgefäßes.

In einer weiteren Erfindungsausgestaltung ist der Verschlusskörper dreiteilig ausgebildet und in einen oberen Bereich der Durchgangsöffnung ein von der Einfüllöffnung in die Eingabeöffnung überleitender Trichter eingepasst, in den wiederum der Stopfen eingepasst ist. Bei dieser Ausgestaltung erleichtert der Trichter die Handhabung, die dann auch unter erschwerten Bedingungen (siehe weiter unten) durchgeführt werden kann. Er hilft bei der Einführung des Gegenstands und der Flüssigkeit in die Einsatzkammer und zentriert den Stopfen beim Einpassen. Das lösbare Einpassen des Stopfens in den Schraubdeckel oder den Trichter wird zudem noch erleichtert, wenn der Stopfen gemäß einer nächsten Erfindungsausgestaltung bevorzugt und vorteilhaft als Silikonstopfen ausgebildet ist.

Bei einer nächsten bevorzugten und vorteilhaften Modifikation des mit der Erfindung beanspruchten Thermosgefäßes ist die Einsatzkammer in einen unteren Bereich der Durchgangsöffnung eingepasst. Der Stopfen kann tief in die Einfüllöffnung bzw. den Trichter eingeführt werden, sodass er sicher sitzt, ohne dass er eingeschraubt ist. Er stößt dann unmittelbar an die Einsatzkammer an und dichtet diese zuverlässig ab.

Gattungsgemäß ist die Einsatzkammer wärmeleitend. Bei der Erfindung kann diese Eigenschaft bevorzugt und vorteilhaft dadurch umgesetzt werden, dass die Einsatzkammer als ein wärmeleitender Metallköcher, beispielsweise aus Silber, Kupfer oder Aluminium, ausgebildet ist. Aluminium ist bekanntermaßen sehr gut wärmeleitend und preiswert. Die weitere Flüssigkeit in der Einsatzkammer kann dadurch besonders schnell durch die Flüssigkeit in der Flüssigkeitskammer temperiert werden. Diese ist gattungsgemäß wiederum gegenüber der Umwelt thermisch isoliert. Bevorzugt und vorteilhaft ist deshalb bei einer nächsten Erfindungsausgestaltung vorgesehen, dass die Flüssigkeitskammer doppelwandig aus Wandungen aus Edelstahl ausgebildet ist, wobei sich zwischen den Wandungen ein Vakuum befindet. Hierbei handelt es sich um die bewährte Doppelwandausgestaltung mit einem thermisch sehr gut isolierenden Vakuumzwischenraum.

Das Isoliergefäß nach der Erfindung kann bei verschiedenen Anwendungen vorteilhaft eingesetzt werden. Eine besonders bevorzugte Anwendung ergibt sich, wenn der von der Einsatzkammer aufzunehmende Gegenstand eine sogenannte "Fettpresse" für einen Unterwassereinsatz ist. Hierbei handelt es sich um eine spritzenartige Vorrichtung, mit deren Hilfe Fett gleichzeitig in mehrere Kontaktlöcher von einer elektrischen Unterwassersteckverbindung (male-Kontaktstifte in female-Kontaktlöcher) eingebracht werden kann. Dies ist erforderlich, um das elektrisch gut leitende Salzwasser aus den Kontaktlöchern auszutreiben und Kurzschlüsse bei der Herstellung der Kontaktverbindung zu vermeiden. Eine derartige Fettpresse ist beispielsweise aus dem europäischen Patent EP 3 587 892 B1 von der Anmelderin bekannt. Für die dort offenbarte Fettpresse eignet sich das mit der vorliegenden Erfindung beanspruchte Thermosgefäß besonders gut. Insbesondere weist die bekannte Fettpresse an ihrem Kolbenende einen schlanken zylindrischen Abschnitt auf. Bevorzugt und vorteilhaft kann deshalb bei der Erfindung vorgesehen sein, dass der Stopfen die Fettpresse in ihrem oberen Bereich dauerhaft umgibt, wobei der Stopfen dann ringförmig ausgebildet ist. Dabei ragt die Fettpresse mit ihrem Vorratsbereich für Fett in die Einsatzkammer hinein und mit ihrem Kolbenende aus dem Thermogefäß heraus. Wenn das Thermosgefäß aufrecht steht (wie ein Thermosbecher in der Hand), bildet das Kolbenende das obere Ende der Fettpresse. Der Stopfen verschließt nicht nur die Einsatzkammer, er sichert auch die Fettpresse gegen Herausfallen aus dem Thermosgefäß.

Das Einsatzgebiet der bekannten Fettpresse ist unter Wasser, insbesondere Flachwasser bis ca. 40 m. Dort ist das Wasser bereits kalt. Dies führt dazu, dass ohne weitere Maßnahmen das Fett auch kalt ist und verhärtet. Das Einbringen in die Kontaktlöcher wird damit erschwert bis unmöglich. Bislang sind die Taucher gezwungen, unter Wasser das Fett mit ihrer Körperwärme zu erwärmen. Nunmehr können sie den mit der Erfindung vorgestellten Thermosbecher im Unterwasserbereich einsetzen und die Fettpresse während eines Einsatzes dauerhaft wärmen. Dazu ist es bevorzugt und vorteilhaft, wenn die Flüssigkeitskammer mit heißem Leitungswasser und die Einsatzkammer mit kaltem Meerwasser befüllbar ist. Die Flüssigkeitskammer wird an Land oder an Bord eines Schiffes mit heißem Wasser (je nach Materialeinsatz unter 50°C) befüllt. Dort wird auch die Einsatzkammer mit heißem Wasser gefüllt, um zu vermeiden, dass der Wasserdruck den Gegenstand unlösbar in die Einsatzkammer drückt. Die Fettpresse wird in die Einsatzkammer eingesetzt, der Stopfen verschließt die Einsatzkammer und verhindert das Herausfallen der Fettpresse. Das heiße Wasser erwärmt das Fett und hält es geschmeidig. Unter Wasser wird dann die Fettpresse bestimmungsgemäß eingesetzt. Beim Entnehmen der Fettpresse unter Wasser entweicht auch das Wasser aus der Einsatzkammer. Beim Einsetzen der Fettpresse unter Wasser wird die Einsatzkammer dann mit kaltem Wasser aus dem Tauchgebiet wieder befüllt. Dieses wird aber schnell durch das thermisch isolierte, warme Wasser in der Flüssigkeitskammer erwärmt und wärmt seinerseits die Fettpresse. Auf diese Weise kann die Fettpresse mehrmals unter Wasser eingesetzt werden, ohne dass das Fett fest wird.

Verbessert wird die Isolationswirkung noch, wenn gemäß einer nächsten vorteilhaften und bevorzugten Erfindungsmodifikation die Flüssigkeitskammer von einer thermisch isolierenden Thermohülle (aus Silikon oder bevorzugt aus Kautschuk, Handelsname Neopren^{®}) umgeben ist. Diese ist flexibel und verbessert auch noch die Handhabung des Thermosgefäßes mit unsensiblen Taucherhandschuhe. Das Thermosgefäß kann auch mit den Handschuhen sicher gehalten werden. Zusätzlich vergrößert die Thermohülle das Volumen des Isoliergefäßes und damit seinen Auftrieb unter Wasser. Insgesamt kann der Trimm des Thermosgefäßes auf einen geringen negativen Wert eingestellt werden, damit es nicht von alleine beispielsweise aus einer Werkzeugtasche aufschwimmt, trotzdem aber vom Taucher keinen zusätzlichen Auftrieb bei der Handhabung benötigt. Das Austarieren kann bevorzugt und vorteilhaft dadurch erfolgen, dass am Boden der Flüssigkeitskammer ein Fußgewicht angeordnet ist, wodurch eine gute Selbstausrichtung des Thermosgefäßes bewirkt wird. Weiterhin ist es vorteilhaft und bevorzugt, wenn am Boden der Flüssigkeitskammer ein Magnet angeordnet ist. Dieser kann beispielsweise im Fußgewicht angeordnet sein. Dadurch wird eine temporäre Fixierung an ferromagnetischen Strukturen oder Ausrüstungsgegenständen (beispielsweise eine Pressluftflasche) ermöglicht, sodass der Taucher die Hände freibekommt für die Handhabung der Fettpresse oder andere Arbeiten.

Das Thermosgefäß nach der Erfindung kann jede praktikable Form erhalten. Besonders einfach herstellbar ist es aber, wenn ein handelsüblicher Thermosbecher ("Travel Mug") als Basis verwendet wird. Hierbei handelt es sich in der Regel um Trinkbecher mit einer Doppelwandung aus Edelstahl, wobei zwischen den beiden Wandungen ein thermisch isolierendes Vakuum ist. Oft ist auch bereits eine zusätzliche thermische Isolierhülle, zumeist aus Silikon, vorgesehen ist. Der Steck- oder Schraubdeckel eines solchen handelsüblichen Thermosbechers wird bei der Erfindung ersetzt durch den beanspruchten Verschlusskörper. Dieser kann bevorzugt dreiteilig ausgebildet sein und neben einem Silikonstopfen noch einen Schraubdeckel mit Durchgangsöffnung und einen Trichter umfassen. Beide Komponenten können besonders einfach mittels 3D-Druck aus einem Kunststoff hergestellt werden. Weitere Erläuterungen zu der vorliegenden Erfindung und ihre angesprochenen Modifikationen können dem nachfolgend aufgezeigten Ausführungsbeispiel entnommen werden.

### Ausführungsbeispiele

Nachfolgend werden das mit der vorliegenden Erfindung beanspruchte Thermosgefäß und bevorzugte Modifikationen anhand der schematischen Figuren zum besseren Verständnis der Erfindung noch weitergehend erläutert. Dabei zeigt die
- **Fig. 1**: das Thermosgefäß mit einer eingesteckten Fettpresse im perspektivischen Querschnitt und die
- **Fig. 2**: das Thermosgefäß im einfachen Querschnitt.

In der **Fig. 1** ist ein Thermosgefäß **01** zum Temperieren einer Flüssigkeit **02** und einer weiteren Flüssigkeit **03** und einem Gegenstand **04** dargestellt. Bei der Flüssigkeit **02** handelt es sich im gewählten Ausführungsbeispiel um einfaches Leitungswasser, beispielsweise mit einer Einfülltemperatur von 45°C. Die Temperatur ist so zu wählen, dass die eingesetzten Materialien keinen Schaden nehmen. Bei der weiteren Flüssigkeit **03** kann es sich zunächst auch um heißes Leitungswasser handelt, im eigentlichen Gebrauch des Thermosgefäßes **01** wird dieses dann durch kaltes Seewasser ersetzt. Bei diesem Anwendungsfall unter Wasser handelt es sich dann bei dem Gegenstand **04** um eine Fettpresse **05.** Bei deren Einsatz ist bei der Temperierung darauf zu achten, dass das Fett die richtige Viskosität erhält. Das Thermosgefäß **01** weist eine große Flüssigkeitskammer **06** auf, die angenähert zylindrisch ausgebildet und von einer thermischen Isolierschicht **07** umgeben ist. Im dargestellten Fall handelt es sich dabei um ein Vakuum **08,** das zwischen einer inneren Wandung **09** und einer äußeren Wandung **10** des Thermosgefäßes **01** ausgebildet ist, wobei die Wandungen **09, 10** aus Edelstahl sind. Die Flüssigkeitskammer **06** weist an ihrem oberen Ende (stehendes Thermosgefäß **01)** eine große Einfüllöffnung **11** auf, durch die Flüssigkeit **02** eingefüllt werden kann. Weiterhin erstreckt sich von der Einfüllöffnung **11** her in die Flüssigkeitskammer **06** hinein eine Einsatzkammer **12.** Diese ist flüssigkeitsdicht, aber wärmeleitend ausgebildet. Im gezeigten Ausführungsbeispiel handelt es sich um einen Metallköcher **13.** Bei der Erfindung werden somit zwei zueinander kaskadierte Temperierkammern umgesetzt, die keine Flüssigkeitsverbindung, aber eine Wärmeleitverbindung untereinander haben. Die Einsatzkammer **12** weist an ihrem oberen Ende (stehendes Thermosgefäß **01)** eine Eingabeöffnung **14** auf. In diese ist ein Verschlusskörper **15** eingepasst, der die Einsatzkammer **12** und die Flüssigkeitskammer **06** flüssigkeitsdicht verschließt.

Über die Eingabeöffnung **14** wurden die weitere Flüssigkeit **03** und die Fettpresse **05** in die Einsatzkammer **12** eingebracht. Dabei ist diese in ihrem Volumen an die Fettpresse **05** angepasst, sodass diese eng umgeben und die erforderlich Menge an weiterer Flüssigkeit **03** minimiert ist. Dadurch wird deren erneute Erwärmung beschleunigt. Der Verschlusskörper **15** ist im dargestellten Ausführungsbeispiel dreiteilig aufgebaut. Er besteht aus einem Schraubdeckel **16** mit einer zentralen Durchgangsöffnung **17,** einem Trichter **18,** der sich von der Einfüllöffnung **11** zur Eingabeöffnung **14** erstreckt, und einem Stopfen **19,** der lösbar in den Trichter **18** hineingesteckt ist und die Einsatzkammer **12** verschließt. Der Schraubdeckel **16** ist unter Zwischenlage einer O-Ringdichtung **20** in die innere Wandung **09** des Thermosgefäßes **01** eingeschraubt. Über eine weitere O-Ringdichtung **21** ist die Einsatzkammer **12** in den Schraubdeckel **16** eingesetzt, wobei ein Absatz **22** an der Einsatzkammer **12** gegen einen weiteren Absatz **23** am Schraubdeckel **16** anschlägt. Durch die beiden O-Ringdichtungen **20, 21** im Schraubdeckel **16** ist die Flüssigkeitskammer **06** dauerhaft flüssigkeitsdicht verschlossen. Der Trichter **18** setzt mit einer unteren Ringfläche **24** auf eine obere Ringfläche **25** der Einsatzkammer **12** auf und ist über eine Verschraubung **26** am Schraubdeckel **16** fixiert.

Der Stopfen **19** ist im Ausführungsbeispiel als Silikonstopfen **27** ausgebildet und umgibt die Fettpresse **05** in einem oberen Bereich. Der Silikonstopfen **27** ist ringförmig bzw. zylindrokonisch ausgebildet. Die dargestellte Fettpresse **05** ist spritzenartig ausgebildet und verfügt über einen Schaft **28,** auf dem der Silikonstopfen **27** dauerhaft sitzt. Der Schaft **28** der Fettpresse **05** geht nach oben in einen Griff **29** über, der im eingesteckten Zustand der Fettpresse **05** in das Thermosgefäß **01** nach oben (Standposition des Thermosgefäßes **01)** über die Einfüllöffnung **11** hinausragt. So kann die Fettpresse **05** zusammen mit dem Silikonstopfen **27** im Einsatzfall unter Wasser leicht aus dem Thermosgefäß **01** entnommen und auch wieder eingeführt werden. Der Silikonstopfen **27** übernimmt dabei die Führung im Trichter **18** und verschließt die Einsatzkammer **12,** nachdem sich diese automatisch mit Seewasser gefüllt hat. In der **Fig. 1** ist noch der untere Bereich der Fettpresse **05** dargestellt, in dem sich ein Fettvorrat **30** befindet. Es ist gut zu erkennen, dass dieser über die weitere Flüssigkeit **03** in der Einsatzkammer **12** und die Flüssigkeit **02** in der Flüssigkeitskammer **06** gewärmt und damit viskos gehalten wird. Der Fettvorrat **30** kann dann einfach mittels Einschieben eines Kolbens **31** über Düsen **32** in Kontaktlöcher einer elektrischen Unterwassersteckverbindung eingespritzt werden. Nähere Details hierzu können der EP 3 587 892 B1 entnommen werden.

Um das Thermosgefäß **01** erstreckt sich eine Thermohülle **33** zur weiteren thermischen Isolation und zur besseren Handhabung des Thermosgefäßes **01.** An einem Boden **34** des Isoliergefäßes **01** ist ein Fußgewicht **35** über eine weitere Verschraubung **36** montiert. Mit dieser wird gleichzeitig ein Magnet **37** in einem Ausschnitt des Fußgewichts **35** gehalten. Das Fußgewicht **35** dient der Austarierung des Thermosgefäßes **01** unter Wasser, beispielsweise kann ein negativer Trimm von 270 g am gefüllten Thermosgefäß **01** erzeugt werden, was eine weitgehend kraftfreie Handhabung unter Wasser ermöglicht. Über den Magneten **37** kann das Thermosgefäß **01** unter Wasser temporär an einem ferromagnetischen Gegenstand, beispielsweise an einer Pressluftflasche, fixiert werden.

Mit dem Thermosgefäß **01** nach der Erfindung wird ein Isoliergefäß zur Verfügung gestellt, mit dem in einfacher Weise kleine Gegenstände dauerhaft temperiert, also gewärmt oder gekühlt, werden können. Neben verschiedenen Flüssigkeiten können auch unterschiedliche Gegenstände genommen werden, an die die Einsatzkammer und der Stopfen angepasst werden. Besonders vorteilhaft kann die Fettpresse **05** im Unterwassereinsatz dauerhaft gewärmt werden. Das Thermosgefäß **01** lässt sich von einem Taucher sehr komfortabel handhaben. Es kann aus einem handelsüblichen Thermosbecher unter Modifikation der Verschlusseinrichtung einfach und kostengünstig hergestellt werden, insbesondere durch 3D-Druck.

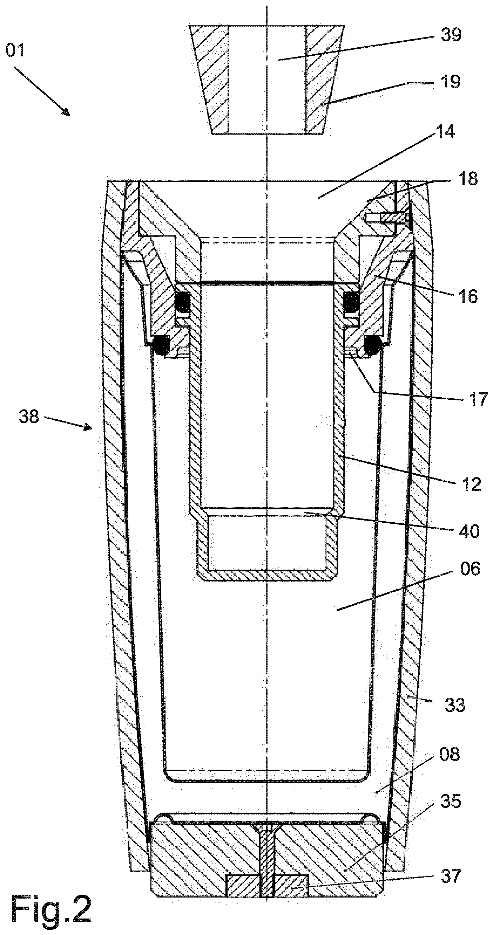

Die **Fig. 2** zeigt das Thermosgefäß **01** ohne Flüssigkeiten und eingesteckten Gegenstand im einfachen Querschnitt. Zu erkennen ist ein handelsüblicher Thermosbecher **38** mit einer geschlossenen Doppelwandung aus Edelstahl und dem thermisch isolierenden Vakuum **08.** Überzogen ist der Thermosbecher **38** mit der ebenfalls thermisch isolierenden Thermohülle **33** (bevorzugt aus Kautschuk Handelsname Neopren^{®}). Im unteren Bereich des Thermosbechers **38** sind das Fußgewicht **35** und der Magnet **37** dargestellt.

Im Innenbereich des Thermosbecher **38** befindet sich die große Flüssigkeitskammer **06,** in die der kleinere Metallköcher **13** eingehängt ist. Gut ist die kaskadierende Abstufung zwischen beiden zu erkennen. Der Metallköcher **13** weist einen Absatz **40** als Anschlag für den einzubringenden Gegenstand auf. Der originale Verschlussdeckel (aus Kunststoff) des handelsüblichen Thermosbechers **38** ist durch Anbringen der Durchgangsöffnung **17** in den Schraubdeckel **16** überführt worden und im Gebrauchszustand in den Thermosbecher **38** eingeschraubt. Ihm gegenüber ist der Metallköcher **13,** der mit dem Schraubdeckel **16** fest verbunden ist, abgestützt. Die Eingabeöffnung **14** wird im Gebrauchsfall von dem Stopfen **19** (oberhalb des Thermosbechers **38** dargestellt) im Trichter **18** flüssigkeitsdicht verschlossen. Dann befindet sich ein beliebiger, zu wärmender oder zu kühlender Gegenstand in dem Metallköcher **13,** der durch eine Durchgangsbohrung **39** im Stopfen **19** hindurchragt, wobei dieser dabei flüssigkeitsdicht am Gegenstand abschließt.

### Bezugszeichenliste

- **01**: Thermosgefäß
- **02**: Flüssigkeit
- **03**: weitere Flüssigkeit
- **04**: Gegenstand
- **05**: Fettpresse
- **06**: Flüssigkeitskammer
- **07**: thermische Isolierschicht
- **08**: Vakuum
- **09**: innere Wandung
- **10**: äußere Wandung
- **11**: Einfüllöffnung
- **12**: Einsatzkammer
- **13**: Metallköcher
- **14**: Eingabeöffnung
- **15**: Verschlusskörper
- **16**: Schraubdeckel
- **17**: Durchgangsöffnung
- **18**: Trichter
- **19**: Stopfen
- **20**: O-Ringdichtung
- **21**: weitere O-Ringdichtung
- **22**: Absatz
- **23**: weiterer Absatz
- **24**: untere Ringfläche
- **25**: obere Ringfläche
- **26**: Verschraubung
- **27**: Silikonstopfen
- **28**: Schaft
- **29**: Griff
- **30**: Fettvorrat
- **31**: Kolben
- **32**: Düse
- **33**: Thermohülle
- **34**: Boden
- **35**: Fußgewicht
- **36**: weitere Verschraubung
- **37**: Magnet
- **38**: Thermosbecher
- **39**: Durchgangsbohrung
- **40**: Absatz

## Patentansprüche

1. Thermosgefäß (01) zum Temperieren von Inhalten mit einer Flüssigkeitskammer (06), die mit einer Flüssigkeit (02) befüllbar und von einer thermischen Isolierschicht (07) umgeben ist und an ihrem oberen Ende eine Einfüllöffnung (11) aufweist, und einer flüssigkeitsdichten Einsatzkammer (12), die sich von der Einfüllöffnung (11) her in die Flüssigkeitskammer (06) erstreckt, wärmeleitend ausgebildet ist und an ihrem oberen Ende eine Eingabeöffnung (14) mit einem Verschlusskörper (15) aufweist, der die Flüssigkeitskammer (06) und die Einsatzkammer (12) flüssigkeitsdicht abschließt,
**dadurch gekennzeichnet, dass**
die Einsatzkammer (12) über die Eingabeöffnung (14) mit einer weiteren Flüssigkeit (03) und mit einem Gegenstand (04) innerhalb der weiteren Flüssigkeit (03) befüllbar ausgebildet ist, wobei der eingefüllte Gegenstand (04) über die Eingabeöffnung (14) hinausragt, und der Verschlusskörper (15) die Einsatzkammer (12) gegenüber dem eingefüllten Gegenstand (04) abschließt.

2. Thermosgefäß (01) nach Anspruch 1,
**dadurch gekennzeichnet, dass**
der Verschlusskörper (15) zumindest zweiteilig ausgebildet ist und aus einem Schraubdeckel (16) mit einer Durchgangsöffnung (17) und einem Stopfen (19), der in die Durchgangsöffnung (17) lösbar eingepasst ist, besteht, wobei der Stopfen (19) den Gegenstand (04) umschließt.

3. Thermosgefäß (01) nach Anspruch 2,
**dadurch gekennzeichnet, dass**
der Verschlusskörper (15) dreiteilig ausgebildet ist und in einen oberen Bereich der Durchgangsöffnung (17) ein von der Einfüllöffnung (11) in die Eingabeöffnung (14) überleitender Trichter (18) eingepasst ist, in den wiederum der Stopfen (19) eingepasst ist.

4. Thermosgefäß (01) nach Anspruch 2 oder 3,
**dadurch gekennzeichnet, dass**
der Stopfen (19) als Silikonstopfen (27) ausgebildet ist.

5. Thermosgefäß (01) nach einem der vorangehenden Ansprüche,
**dadurch gekennzeichnet, dass**
in einen unteren Bereich der Durchgangsöffnung (17) die Einsatzkammer (12) eingepasst ist.

6. Thermosgefäß (01) nach einem der vorangehenden Ansprüche,
**dadurch gekennzeichnet, dass**
die Einsatzkammer (12) als ein wärmeleitender Metallköcher (13) ausgebildet ist.

7. Thermosgefäß (01) nach einem der vorangehenden Ansprüche,
**dadurch gekennzeichnet, dass**
die Flüssigkeitskammer (06) doppelwandig aus Wandungen (09, 10) aus Edelstahl ausgebildet ist, wobei sich zwischen den Wandungen (09, 10) ein Vakuum (08) befindet.

8. Thermosgefäß (01) nach einem der vorangehenden Ansprüche,
**dadurch gekennzeichnet, dass**
der Gegenstand (04) eine Fettpresse (05) für einen Unterwassereinsatz ist.

9. Thermosgefäß (01) nach Anspruch 8 und einem der Ansprüche 2 bis 7,
**dadurch gekennzeichnet, dass**
der Stopfen (19) die Fettpresse (05) in ihrem oberen Bereich dauerhaft umgibt.

10. Thermosgefäß (01) nach einem der vorangehenden Ansprüche,
**dadurch gekennzeichnet, dass**
die Flüssigkeitskammer (06) mit heißem Leitungswasser und die Einsatzkammer (12) mit kaltem Seewasser befüllbar ist.

11. Thermosgefäß (01) nach einem der vorangehenden Ansprüche,
**dadurch gekennzeichnet, dass**
die Flüssigkeitskammer (06) von einer thermisch isolierenden Thermohülle (33) umgeben ist.

12. Thermosgefäß (01) nach einem der vorangehenden Ansprüche,
**dadurch gekennzeichnet, dass**
am Boden (34) der Flüssigkeitskammer (06) ein Fußgewicht (35) angeordnet ist

13. Thermosgefäß (01) nach einem der vorangehenden Ansprüche,
**dadurch gekennzeichnet, dass**
am Boden (34) der Flüssigkeitskammer (06) ein Magnet (37) angeordnet ist.
